(19) Europäisches Patentamt
European Patent Office
Office européen des brevets

(11) **EP 1 081 526 A2**

(12) **EUROPÄISCHE PATENTANMELDUNG**

(43) Veröffentlichungstag:
**07.03.2001 Patentblatt 2001/10**

(51) Int. Cl.7: **G02B 17/06**

(21) Anmeldenummer: **00117053.9**

(22) Anmeldetag: **09.08.2000**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **02.09.1999 DE 19942072**

(71) Anmelder:
• **Carl Zeiss**
  **89518 Heidenheim (Brenz) (DE)**
  Benannte Vertragsstaaten:
  **CH DE FR IT**
• **Carl-Zeiss-Stiftung trading as Carl Zeiss**
  **89518 Heidenheim (Brenz) (DE)**
  Benannte Vertragsstaaten:
  **GB**

(72) Erfinder: **Sand, Rolf, Dr.**
  **73447 Oberkochen (DE)**

(54) **Afokales Vier-Spiegelsystem für die optische Telekommunikation**

(57) Afokales Mehrspiegelsystem mit asphärischen Spiegeln, durch das eine hohe Vergrößerung bereitstellbar ist, wobei zur Vermeidung einer Mittenabschattung mindestens zwei Spiegel verkippt zur optischen Achse eines ersten Spiegels angeordnet sind, wobei mindestens ein sphärischer Spiegel (7, 9) vorgesehen ist.

EP 1 081 526 A2

**Beschreibung**

Die Erfindung betrifft ein afokales Mehrspiegelsystem gemäß dem Oberbegriff des Patentanspruchs 1.

Es ist beispielsweise aus der US 5,309,276 ein afokales Mehrspiegelsystem für die Bereitstellung einer hohen Vergrößerung bekannt, das vier asphärische Spiegel aufweist. Weiterhin kann mit diesem Spiegelsystem ein symmetrisches Feld erzeugt werden. Die Korrektur der Aberration wird insbesondere durch den 3. asphärischen Spiegel bewirkt.

Alle Spiegel sind geneigt zueinander angeordnet und weisen keine gemeinsame optische Achse auf, wobei der Eingangsstrahl zum Ausgangsstrahl senkrecht verläuft. Dadurch sind Eingangs- und Ausgangsstrahlen gut zugänglich.

Für die Bereitstellung des Vergrößerungsfaktors 9 weisen die Spiegel die Brechkräfte 1:2,94; 0,5:2,14 auf. Für den Vergrößerungsfaktor 4 sind die Brechkräfte 1:2,69; 0,56:1,57 und für die Vergrößerung von 6/5 die Brechkräfte 1:2,9; 0,006:1,94 gewählt worden.

Nachteilig ist bei diesem Mehrspiegelsystem, daß es ausschließlich aus asphärischen Spiegeln besteht, die aufwendig in der Herstellung sind, was sich negativ auf die Herstellkosten auswirkt.

Aus der US 4,226,501 ist ein Mehrspiegelsystem mit 5 Spiegeln bekannt, wobei der 2. Spiegel alleinig für eine Reflexion vorgesehen ist. Alle Spiegel sind zu einer gemeinsamen optischen Achse ausgerichtet, ohne daß Abschattungseffekte auftreten.

Nachteilig ist bei diesem System, daß die mit diesem System bereitstellbare erzielbare Vergrößerung für einige Anwendungen nicht ausreicht.

Außerdem handelt es sich bei diesem System um kein afokales System. Auch sind Eingangs- und Austrittsstrahl aufgrund ihrer geometrischen Anordnung nur in eingeschränktem Maße zugänglich.

Aus der DE 197 46 925 C1 ist ein Linsensystem bekannt, mit dem eine Vergrößerung um den Faktor 10 möglich ist. Nachteilig ist bei Linsensystemen, daß Strahlungsverluste durch Absorption in den Linsen unvermeidbar sind, die aufgrund der Vielzahl an Linsen um ein mehrfaches größer sind als die Intensitätsverluste eines Spiegelsystems.

Aufgabe der Erfindung ist es, ein Mehrspiegelsystem derart weiterzubilden, daß die Herstellkosten vermindert werden.

Weiterhin lag der Erfindung die Aufgabe zugrunde, die erzielbare Vergrößerung bei einer hohen Bildqualität zu erhöhen.

Die Aufgabe der Erfindung wird durch die im Patentanspruchs gegebenen Merkmale gelöst.

Durch die Maßnahme mindestens einen sphärischen Spiegel vorzusehen, werden die Kosten verringert.

Es hat sich als vorteilhaft herausgestellt, daß für den 1. und 2. Spiegel jeweils ein asphärischer Spiegel vorgesehen ist. Mittels des ersten asphärischen Spiegels kann insbesondere die sphärischen Aberration und der Astigmatismus korrigiert werden. Durch den zweiten asphärischen Spiegel ist eine gute Korrektur der Koma, insbesondere in Kombination mit dem ersten asphärischen Spiegel, erzielbar.

Es hat sich als vorteilhaft herausgestellt, als ersten Spiegel eine reine Ellipse für die Korrektur der Bildfehler vorzusehen. Der erste Spiegel ist für diese Korrektur besonders geeignet, da die jeweilige Ausleuchtung durch ein einfallendes Strahlenbündel bei diesem Spiegel am größten ist. Für die Korrektur der Koma und weiterer Bildfehler hat sich ein Hyperboloidspiegel als zweiter Spiegel als vorteilhaft herausgestellt.

Vorzugsweise ist mindestens einer der auf den zweiten Spiegel nachfolgenden Spiegel ein sphärischer Spiegel, so daß durch den Einsatz mindestens eines sphärischen Spiegels eine Kostenminimierung gewährleistet ist.

Es hat sich als vorteilhaft herausgestellt, daß eine, durch die ersten beiden Spiegel bereitgestellte Sekundärvergrößerung (m) kleiner als 4, vorzugsweise m = 3,25, ist, wobei sich die Sekundärvergrößerung aus der Brechkraft des ersten Spiegels, dividiert durch die Gesamtbrechkraft des ersten und zweiten Spiegels ergibt. Durch diese relativ kleine Sekundärvergrößerung wird die Empfindlichkeit des Spiegelsystems in Bezug auf Abstandsänderung der ersten beiden Spiegel zueinander, verringert, wobei sich solche Abstandsänderungen im allgemeinen auf die Abbildungsqualität auswirken.

Weitere vorteilhafte Maßnahmen sind in weiteren Unteransprüchen beschrieben. Im folgenden wird die Erfindung anhand eines Ausführungsbeispiels näher beschrieben.

Es zeigt:

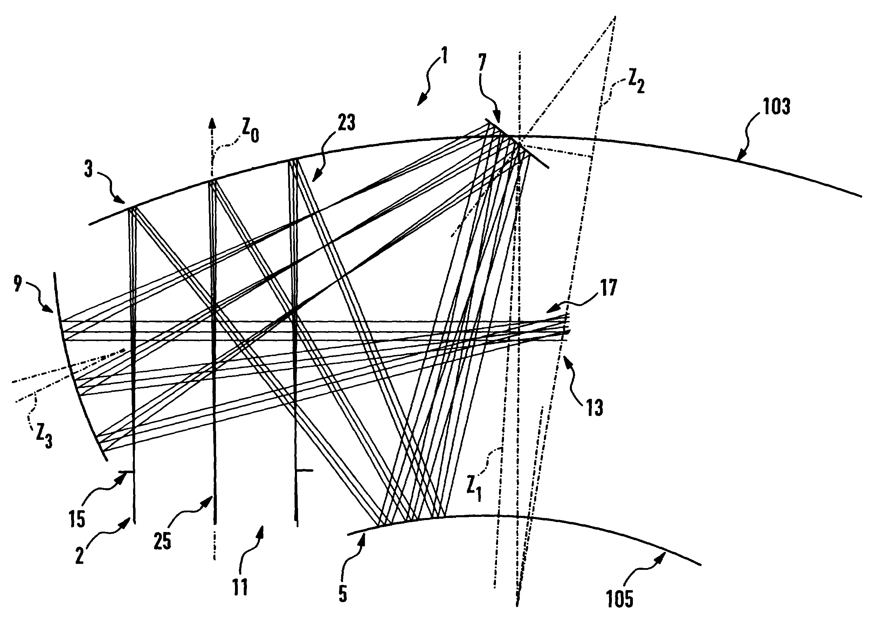

Figur 1:     4-Spiegelanordnung

Bei der in Figur 1 dargestellten Spiegelanordnungen handelt es sich um ein afokales Spiegelsystem 1 für die Bereitstellung einer Vergrößerung um einen Faktor 10. Ein Bündel paralleler Strahlen 11 trifft einen konkaven asphärischen Spiegel 3, hier ein konkaver Ellipsoidspiegel 103. Der konkave Ellipsoidspiegel 103 ist zu einer $Z_0$-Achse um einen Winkel von -1,27° zur optischen Achse 21 gekippten, wobei ein positiver Winkelbetrag ein Kippen gegen den Uhrzeigersinn bedeutet. Außerdem ist der Ellipsoidspiegel 103 unter einem Versatz von -161,6 mm zur $Z_0$-Achse angeordnet. Die asphärischen Koeffizienten dieses Spiegels 103 werden in Abhängigkeit von den zu korrigierenden Bildfehlern ausgewählt. In diesem Ausführungsbeispiel ist nur ein Koeffizient zur Beschreibung der asphärischen Spiegeloberfläche erforderlich. Der asphärische Koeffizient dieses Systems ist:

$$K = -0{,}93$$

, wobei die Spiegeloberfläche durch die Formel :

$$K = \frac{1/R^*(X^2+Y^2)}{1+(1-(1+K)(1/R)^2(X^2+Y^2))^{1/2}}$$

wobei R der Scheitelradius ist, beschrieben wird. Der erste Spiegel ist in einem Abstand 170 mm von der Eintrittspupille angeordnet. Der Radius des ersten Spiegels beträgt 553,6 mm.

Mittels diesem ersten asphärischen Spiegel 3 läßt sich insbesondere gut die sphärische Aberration des Systems korrigieren, da der Durchmesser eines kollimierten Eingangsstrahls, durch den der Spiegel 3, 103 bzw. die Spiegeloberfläche beleuchtet wird, hier noch sehr groß ist. Dadurch ist eine gute Einflußnahme zur Korrektur der sphärischen Aberration möglich.

Der von dem ersten Spiegel 3, 103 reflektierte Strahl 2 bzw. das reflektierte Strahlenbündel trifft auf einen zweiten asphärischen Spiegel 5, bei dem es sich um einen konvexen Hyperboloidspiegel 105 handelt. Dieser zweite asphärische Spiegel läßt sich mathematisch durch die Formel beschreiben:

$$K = \frac{1/R^*(X^2+Y^2)}{1+(1-(1+K)(1/R)^2(X^2+Y^2))^{1/2}}$$

mit der Konstanten K = 2,88

Dieser zweite Spiegel 5 ist in bezug zu einer zweiten optischen Achse $Z_1$ um einem Winkel von 4,45° gekippt angeordnet. Diese optische Achse $Z_1$ wird durch die senkrecht zur Spiegeloberfläche des ersten Spiegels 3 gebildet, indem die Spiegelachse 3 um den Kippwinkel des ersten Spiegels 3 gekippt wird. Der zweite Spiegel 15, 105 ist unter einem Versatz von -14 mm angeordnet. Der Radius des zweiten Spiegels ist 231,0 mm. Dieser erste Spiegel ist in einem Abstand von 197,2 mm von dem ersten Spiegel entfernt angeordnet.

Dieser zweite asphärische Spiegel ist insbesondere für die Korrektur der Koma vorgesehen. Durch diese ersten beiden asphärischen Spiegeln wird ein 2-Spiegelsystem gebildet, das eine Sekundärvergrößerung von m= 3,25 liefert. Diese Sekundärvergrößerung ist relativ klein gewählt, wodurch das Spiegelsystem auf Abstandsänderungen von 103 zu 105 nicht so empfindlich reagiert. Solche Abstandsänderungen können z.B. durch Temperaturschwankungen am Einsatzort begründet sein.

Der vom zweiten Spiegel reflektierte Lichtstrahl trifft auf einen dritten Spiegel 7, für den ein konvexer sphärischer Spiegel mit einem Radius von 324,3 mm vorgesehen ist. Dieser Spiegel ist zu einer $Z_2$-Achse um den Winkel von -25,8° gekippt, wobei die $Z_2$-Achse in äquivalenter Weise wie zuvor die $Z_1$ ermittelt worden ist, zu ermitteln ist. Der dritte Spiegel 7 ist unter einem Versatz von 43,5 mm angeordnet.

Mittels des dritten Spiegels wird eine Nachvergrößerung von β = 1,65 erzielt. Nach diesem dritten Spiegel 7 entsteht ein Zwischenbild 23. Dem dritten Spiegel ist ein vierter Spiegel 9 zugeordnet, bei dem es sich ebenfalls um einen sphärischen Spiegel handelt. Der vierte Spiegel 9 wird so angeordnet, daß das Zwischenbild 23 im Fokus desselben liegt. Dieser Spiegel 9 ist ein konkaver Spiegel mit einem Radius der Spiegeloberfläche von 300,38 mm. Dieser Spiegel 9 ist zu einer $Z_3$-Achse um einen Winkel von -11,8° gekippt, wobei die $Z_3$-Achse in äquivalenter Weise wie die Achsen $Z_1$ und $Z_2$ gebildet wird. Der vierte Spiegel ist unter einem Versatz von 8,2 mm angeordnet worden. Durch die von diesem Spiegel reflektierten Strahlen wird der Ausgangsstrahl 13 des Spiegelsystems 1 gebildet. Die winklig im Bereich der Eintrittspupille 15 zueinander verlaufendes Strahlenbündel paralleler Strahlen schneiden sich in einer Austrittspupille 17 wieder.

Die Brechkräfte dieser Spiegel 3, 5, 7, 9 verhalten sich wie 1:2,39:1,7:1,84. Die Parameter des jeweiligen Systems sind auf das gewünschte Sehfeld abzustimmen. Dieses System ist für ein System mit einem Sehfeld von 1,4° ausgelegt.

Weitere Ausführungsbeispiele ergeben sich durch Multiplikation des Versatz des Spiegelmittelpunktes des jeweiligen Spiegels und der Abstände zwischen den Spiegeln und der Radien der Spiegel mit einem beliebigen Faktor. Die Kippwinkel sind dabei unverändert beizubehalten.

Bezugszeichenliste:

| | |
|---|---|
| 1 | afokales Spiegelsystem |
| 2 | Lichtstrahl |
| 3 | konkaver asphärischer Spiegel |
| 5 | konvexer asphärischer Spiegel |
| 7 | konvexer sphärischer Spiegel |
| 9 | konkaver sphärischer Spiegel |
| 11 | Eingangsstrahl |
| 13 | Ausgangsstrahl |
| 15 | Eingangspupille |
| 17 | Ausgangspupille |
| 19 | Sehfeldwinkel |
| 21 | optische Achse |
| 23 | Zwischenbild |
| 25 | Strahlenbündel |
| 103 | Ellipsoidspiegel |
| 105 | Hyperboloidspiegel |
| m = | Sekundärvergrößerung |

**Patentansprüche**

1. Afokales Mehrspiegelsystem mit asphärischen Spiegeln, durch das eine hohe Vergrößerung bereitstellbar ist, wobei zur Vermeidung einer Mittenabschattung mindestens zwei Spiegel verkippt zur optischen Achse angeordnet sind, dadurch gekennzeichnet, daß mindestens ein sphärischer Spiegel (7, 9) vorgesehen ist.

2. Afokales Mehrspiegelsystem nach Anspruch 1, das vier Spiegel aufweist, dadurch gekennzeichnet, daß mindestens der dritte Spiegel (7) oder der vierte Spiegel (9) ein sphärischer Spiegel ist.

3. Afokales Vierspiegelsystem nach Anspruch 2, dadurch gekennzeichnet, daß der dritte Spiegel (7) und der vierte Spiegel (9) sphärische Spiegel sind.

4. Afokales Mehrspiegelsystem nach mindestens einem der vorangegangenen Ansprüche, dadurch gekennzeichnet, daß die ersten beiden Spiegel (3, 5) eine Sekundärvergrößerung von max. 4 bereitstellen, wobei für die Sekundärvergrößerung gilt:

$$\frac{\emptyset_1}{\emptyset_{12}} \qquad \text{mit } \emptyset \text{ der Brechkraft des jeweiligen Spiegels,}$$

wobei für

$$\emptyset_{12} = \emptyset_1 + \emptyset_2 + d * (\emptyset_1 * \emptyset_2)$$

gilt und d der Abstand zwischen den Spiegeln ist.

5. Afokales Mehrspiegelsystem nach mindestens einem der vorangegangenen Ansprüche, dadurch gekennzeichnet, daß für die Brennweiten der Spiegel (3, 5, 7, 9) gilt :

$$\emptyset_{123} = V * \emptyset_4 \qquad \text{mit V dem Vergrößerungsfaktor, insbesondere}$$

V=10.

6. Afokales Mehrspiegelsystem nach mindestens einem der vorangegangenen Ansprüche, dadurch gekennzeichnet,

**4**

daß der dritte Spiegel (7) eine Nachvergrößerung β um mindestens den Faktor β = 1,5 leistet.

7. Afokales Mehrspiegelsystem nach mindestens einem der vorangegangenen Ansprüche, dadurch gekennzeichnet, daß die eingesetzten Spiegel (3, 5, 7, 9) Brechkräfte aufweisen, deren Verhältnis 1:2,39:1,7:1,84 ist.

8. Afokales Mehrspiegelsystem nach mindestens einem der vorangegangenen Ansprüche, dadurch gekennzeichnet, daß der dritte Spiegel (7) eine merkliche Brechkraft aufweist, die vorzugsweise größer als 1,5 ist.

9. Afokales Mehrspiegelsystem mit einem Eingangs- und Ausgangsstrahl nach mindestens einem der vorangegangenen Ansprüche, dadurch gekennzeichnet, daß der Ausgangsstrahl (13) senkrecht bzw. nahezu senkrecht zum Eingangsstrahl (11) verläuft.

10. Afokales Mehrspiegelsystem nach mindestens einem der vorangegangenen Ansprüche, dadurch gekennzeichnet, daß alle Spiegel gedreht und dezentriert zur optischen Achse (21) angeordnet sind.